# EUROPEAN PATENT APPLICATION

(11) **EP 2 930 480 A1**
(43) Date of publication of application: **14.10.2015**
(21) Application number: 14163955.9
(22) Date of filing: 09.04.2014
(51) Int. Cl.: G01J 1/26, G01J 1/02

(54) **Multifunctional digital type anti-glare device**

(71) Applicant: Otos Wing Co., Ltd., Geumcheon-ku Seoul 153-801 (KR)
(72) Inventor: Huh, Moon Young, Seoul 153-801 (KR)
(74) Representative: Dr. Weitzel & Partner

(57) **Abstract**

Disclosed herein is a multifunctional digital type anti-glare device which adds various functions such as a timer function, a stopwatch function, a world time display function, and a compass function. The multifunctional digital type anti-glare device includes an optical detection unit, an electromagnetic wave sensor unit, an electromagnetic wave detection unit, a control unit, a light transmission control unit for controlling variation in light transmissivity of an anti-glare plate depending upon an output signal of the control unit, a geomagnetic sensor for detecting an azimuth using the earth's magnetic field, and a compass display unit for displaying points of a compass depending upon the azimuth detected by the geomagnetic sensor.

## Description

The present invention relates to a digital type anti-glare device, and more particularly to a multifunctional digital type anti-glare device which adds various functions such as a timer function, a stopwatch function, a world time display function, and a compass function.

In general, when welding, cutting, or grinding is performed, a worker wears a welding mask for blocking strong light and performs a work, in order to protect the worker's eyes from various types of harmful materials. Accordingly, various convenient and safe electronic welding masks have been developed and utilized.

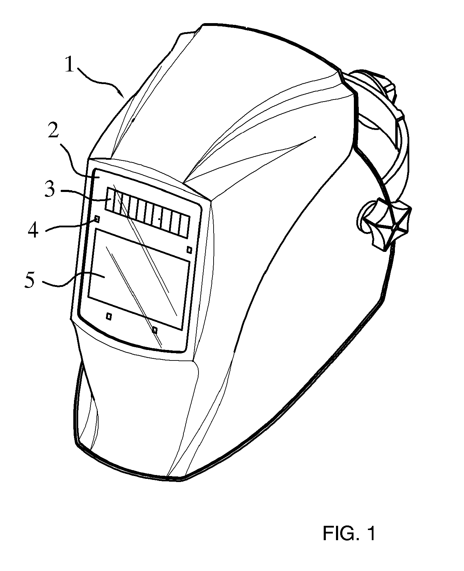

FIG. 1 is a perspective view of a conventional protective mask including an anti-glare device.

As shown in FIG. 1, the protective mask 1 including the anti-glare device 2 formed on a front surface thereof reduces illumination intensity of light irradiated to the worker's eyes through an anti-glare plate 5 which is an LCD (liquid crystal display) included in the anti-glare device 2.

That is, a photo-sensor unit 4 such as a photodiode included in a front surface of the anti-glare device 2 senses light generated by a welding and cutting torch. Thus, a control circuit integrated into the anti-glare device 2 controls the anti-glare plate 5 to be darkened such that illumination intensity of light passing through the anti-glare plate is reduced. Consequently, the worker's eyes are protected by the protective mask 1.

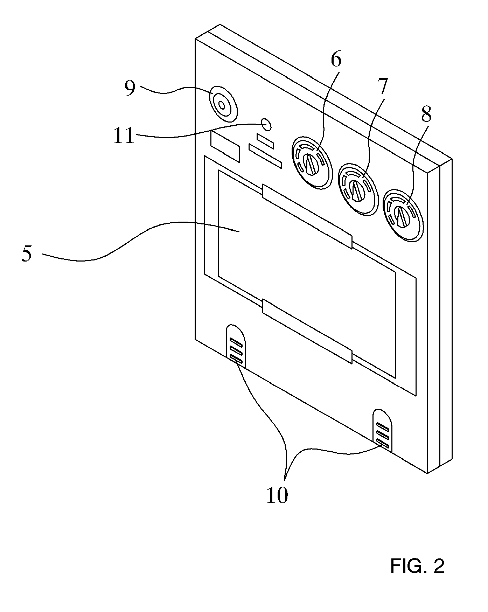

FIG. 2 is a view illustrating a user interface for adjusting shade, light detection sensitivity, and time delay of the conventional anti-glare device.

Referring to FIG. 2, the user interface of the conventional anti-glare device 2 includes a shade adjustment unit 6, a light detection sensitivity adjustment unit 7, and a time delay adjustment unit 8.

The shade adjustment unit 6 adjusts a shade value of the anti-glare plate 5. The shade value refers to a darkness degree of the anti-glare plate 5. When the shade value is adjusted by the shade adjustment unit 6, light transmissivity of the anti-glare plate 5 is adjusted.

The light detection sensitivity adjustment unit 7 adjusts light detection sensitivity of the anti-glare device 2. The light detection sensitivity refers to a value indicating a degree to which the control circuit of the anti-glare device 2 responds to an output signal of the photo-sensor unit 4. If the light detection sensitivity level is high, the control circuit may respond to the output signal with low illumination intensity.

The time delay adjustment unit 8 adjusts time delay of the anti-glare device 2. In a case in which the time delay level is low, the control circuit of the anti-glare device 2 rapidly switches the anti-glare plate 5 from a dark state to a bright state when the photo-sensor unit 4 senses that welding is finished. In contrast, when the time delay level is high, it takes substantial time to switch the anti-glare plate 5 from the dark state to the bright state.

Typically, in industries associated with the anti-glare device, the shade value level is 5 to 13, the light detection sensitivity level is 0 to 10, and the time delay level is 0 to 10. In addition, the user interface of the conventional anti-glare device 2 includes a power switch 9 for turning power on/off, a battery 10 for supplying power, and a low voltage indicator 11 for indicating a low voltage state of the device.

Meanwhile, the present applicant developed various anti-glare devices. For example, Korean Patent Application No. 10-2004-0052291, filed on July 6, 2004 discloses an electromagnetic wave detection anti-glare device for detecting electromagnetic waves generated together with light of high illumination intensity by a welding or cutting torch and protecting the worker's eyes. In addition, Korean Patent Application No. 10-2005-0127844 filed on December 22, 2005 discloses an anti-glare device using voice recognition control, which enables convenient control of various functions without any need for a worker to use their hands during welding and reports a control and operation state thereof vocally by performing a welding light blocking function using voice recognition technology, and a method of controlling the same.

However, there is a problem in that the above-mentioned conventional anti-glare device is not provided with various additional functions, aside from an anti-glare function.

Therefore, the present invention has been made in view of the above problems, and it is an object of the present invention to provide a multifunctional digital type anti-glare device, in which the device may be utilized in a wider variety of ways and more conveniently by adding various functions such as a timer function, a stopwatch function, a world time display function, and a compass function.

In accordance with an aspect of the present invention, the above and other objects can be accomplished by the provision of a multifunctional digital type anti-glare device including an optical detection unit for detecting light generated by a welding or cutting torch, an electromagnetic wave sensor unit for sensing electromagnetic waves generated by the welding or cutting torch, an electromagnetic wave detection unit for comparing a resonated signal received through the electromagnetic wave sensor unit with a variably set reference value, when an electromagnetic wave detection unit operation signal is applied, a control unit for applying the electromagnetic wave detection unit operation signal to the electromagnetic wave detection unit and monitoring variation in an electromagnetic wave signal received via the electromagnetic wave detection unit, when optical detection is initiated by the optical detection unit, a light transmission control unit for controlling variation in light transmissivity of an anti-glare plate depending upon an output signal of the control unit, a geomagnetic sensor for detecting an azimuth using the earth's magnetic field, and a compass display unit for displaying points of a compass depending upon the azimuth detected by the geomagnetic sensor.

The control unit may determine that an orientation to be displayed is a preset orientation depending upon the azimuth detected by the geomagnetic sensor, and perform control such that the relevant orientation is indicated as points on the compass and displayed by the compass display unit.

In addition, the multifunctional digital type anti-glare device may include a timer input unit for counting a time, a memory unit for storing time and date data for each nation of the world, a timer display unit for displaying a set residual time using the count time of the timer input unit, a stopwatch display unit for displaying a set elapsed time using the count time of the timer input unit, and a world time and date display unit for displaying a time and a date of the selected nation using the time and date data for each nation of the world stored in the memory unit.

In accordance with a multifunctional digital type anti-glare device according to the present invention, since various functions such as a timer function, a stopwatch function, a world time display function, and a compass function may be additionally performed depending upon a work environment and an operating condition, the device may be utilized in a wider variety of ways and more conveniently.

The above and other objects, features and other advantages of the present invention will be more clearly understood from the following detailed description taken in conjunction with the accompanying drawings, in which:
FIG. 1 is a perspective view of a conventional protective mask including an anti-glare device;
FIG. 2 is a view illustrating a user interface for adjusting shade, light detection sensitivity, and time delay of the conventional anti-glare device;
FIG. 3 is a block diagram illustrating a multifunctional digital type anti-glare device according to the present invention;
FIG. 4 is a top view of an anti-glare plate indicating a timer function according to the present invention;
FIG. 5 is a top view of the anti-glare plate indicating a stopwatch function according to the present invention;
FIG. 6 is a top view of the anti-glare plate indicating a world time and date display function according to the present invention;
FIG. 7 is a top view of the anti-glare plate indicating a compass function according to the present invention;

Reference will now be made in detail to the preferred embodiment of the present invention with reference to the attached drawings.

The terms or words used in the specification and claims of the present invention are not to be construed as limited to ordinary or dictionary meanings, but should be construed as meanings and concepts conforming to the technical spirit of the present invention on the basis of the principle that the inventors can define the concept of the terms properly to explain their invention with the best method.

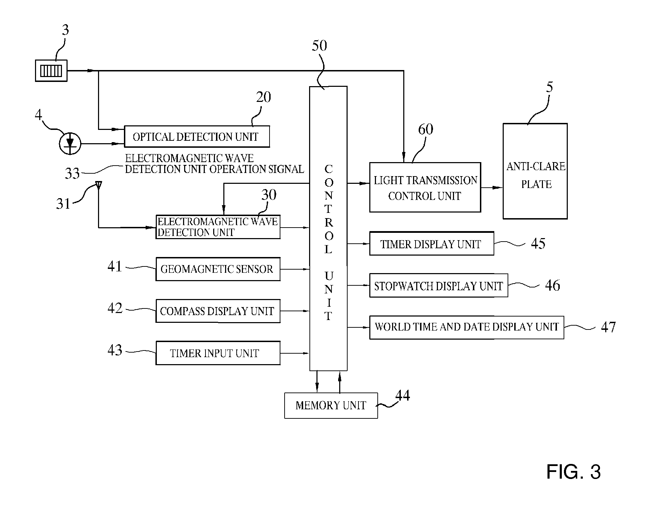

FIG. 3 is a block diagram illustrating a multifunctional digital type anti-glare device according to the present invention.

As shown in the drawing, the digital type anti-glare device according to the present invention includes an optical detection unit 20, an electromagnetic wave detection unit 30, an electromagnetic wave sensor unit 31, a geomagnetic sensor 41, a compass display unit 42, a timer input unit 43, a memory unit 44, a timer display unit 45, a stopwatch display unit 46, a world time and date display unit 47, a control unit 50, and a light transmission control unit 60.

The optical detection unit 20 detects light generated by a welding or cutting torch and includes a filter and an amplifier. The optical detection unit 20 compares a signal received via a photo-sensor unit 4 with output of a solar battery 3 and detects variation in light quantity.

The electromagnetic wave detection unit 30 detects electromagnetic waves generated by the welding or cutting torch. The electromagnetic wave detection unit 30 compares a resonated and filtered signal received through the electromagnetic wave sensor unit 31, which senses the electromagnetic waves generated by the welding or cutting torch of a worker, with a preset value so as to detect electromagnetic waves having a specific bandwidth.

When optical detection is initiated by the optical detection unit 20, the control unit 50 applies an electromagnetic wave detection unit operation signal 33 to the electromagnetic wave detection unit 30 and monitors variation in an electromagnetic wave signal received via the electromagnetic wave detection unit.

The light transmission control unit 60 controls variation in light transmissivity of an anti-glare plate 5 depending upon an output signal of the control unit 50.

In addition, the light transmission control unit 60 measures and displays the number of times of control and time when the variation in light transmissivity of the anti-glare plate is controlled depending upon the output signal of the control unit 50.

A light transmission control unit 60 according to another embodiment of the present invention measures the number of times of control and time and displays an effective time when the variation in light transmissivity of the anti-glare plate is controlled depending upon the output signal of the control unit 50.

The geomagnetic sensor 41 detects an azimuth using the earth's magnetic field, and the compass display unit 42 displays points of a compass depending upon the azimuth detected by the geomagnetic sensor.

In this case, the control unit 50 determines that an orientation to be displayed is a preset orientation depending upon the azimuth detected by the geomagnetic sensor 41, and controls such that the relevant orientation is indicated as points on the compass and displayed by the compass display unit 42.

The timer input unit 43 is configured of a typical timer to count a time.

The timer display unit 45 displays a set residual time using the count time of the timer input unit.

The stopwatch display unit 46 displays a set elapsed time using the count time of the timer input unit.

The memory unit 44 stores time and date data for each nation of the world, and the world time and date display unit 47 displays a time and a date of the selected nation using the time and date data for each nation of the world stored in the memory unit.

Hereinafter, a preferred embodiment of the present invention having such configurations will be described in more detail.

First, the optical detection unit 20 detects welding light through the signal received via the photo-sensor unit 4, and more particularly detects light generated by the welding or cutting torch.

Subsequently, the control unit 50 sets a reference value for controlling detection sensitivity of the optical detection unit 20 according to an input value of the user, sets light transmission density and operation delay time of the anti-glare plate 5, and determines that the detected light is the welding light when the quantity of light detected by the optical detection unit 20 is equal to or greater than a preset reference value, thereby operating the light transmission control unit 60.

Accordingly, the light transmission control unit 60 operates the anti-glare plate 5 depending upon the light transmission density set by the control unit 50 so as to control light transmissivity to a predetermined value or less.

Meanwhile, the user may additionally utilize various functions such as a timer function, a stopwatch function, a world time display function, and a compass function depending upon a work environment and an operating condition.

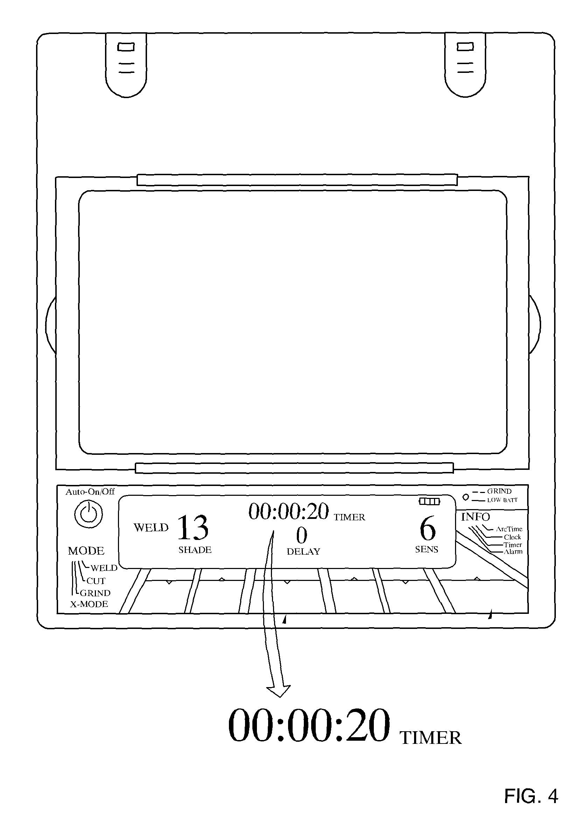

FIG. 4 is a top view of the anti-glare plate indicating the timer function according to the present invention. When the user uses the timer function, the timer input unit 43 may count the time and the timer display unit 45 may display the set residual time using the count time of the timer input unit.

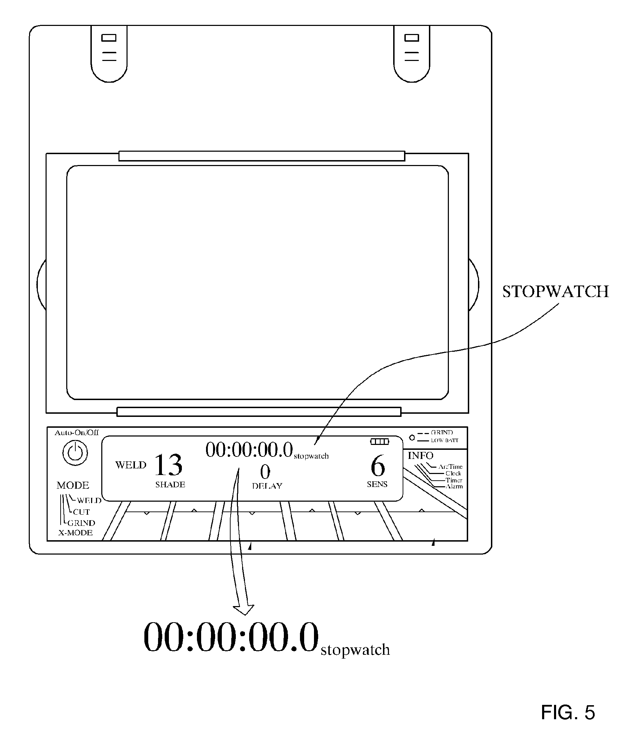

FIG. 5 is a top view of the anti-glare plate indicating the stopwatch function according to the present invention. When the user uses the stopwatch function, the timer input unit 43 may count the time and the stopwatch display unit 46 may display the set elapsed time using the count time of the timer input unit.

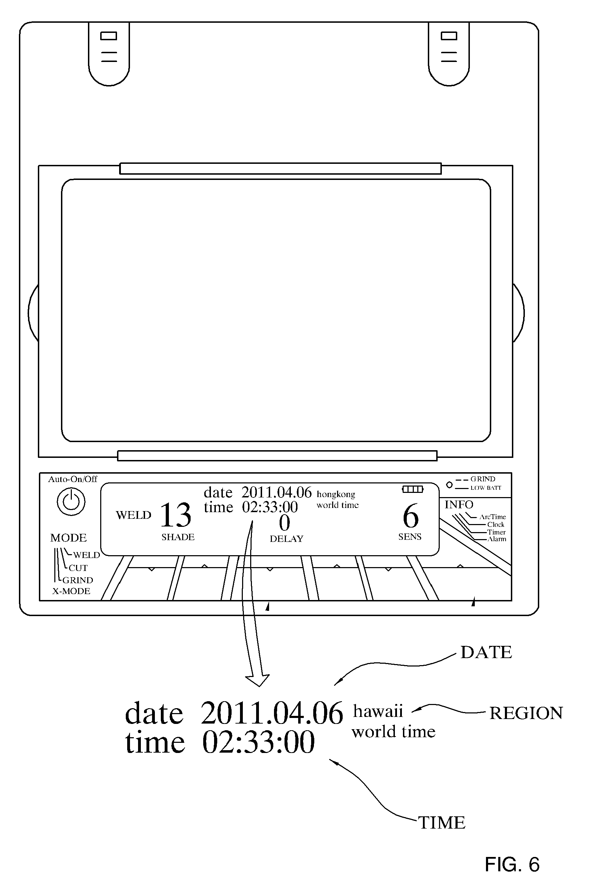

FIG. 6 is a top view of the anti-glare plate indicating the world time and date display function according to the present invention. When the user uses the world time and date display function, the memory unit 44 may store the time and date data for each nation of the world, and the world time and date display unit 47 may display the time and date of the selected nation using the time and date data for each nation of the world stored in the memory unit.

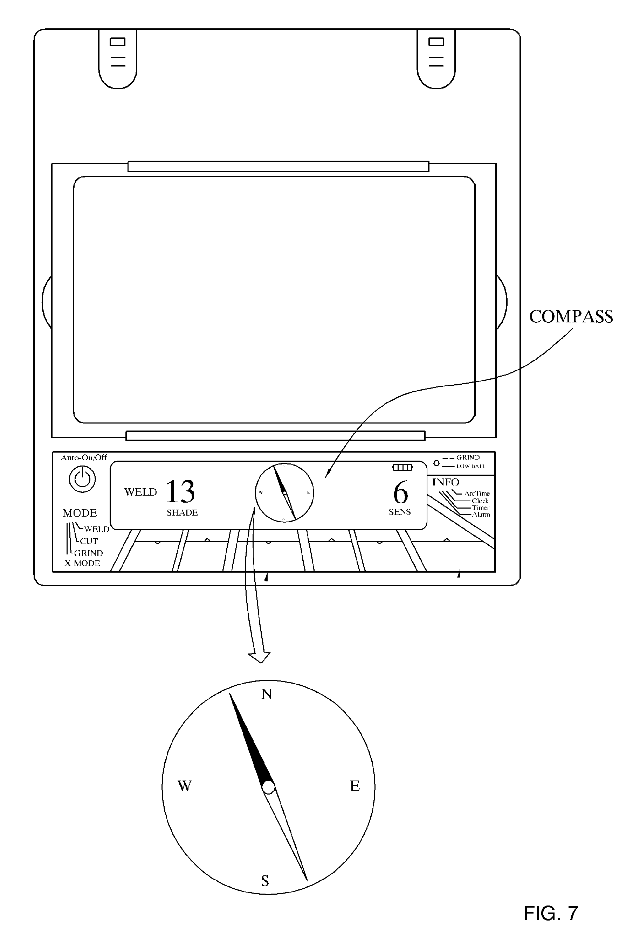

FIG. 7 is a top view of the anti-glare plate indicating the compass function according to the present invention. When the user uses the compass function, the geomagnetic sensor 41 may detect the azimuth using the earth's magnetic field and the compass display unit 42 may display the points of the compass depending upon the azimuth detected by the geomagnetic sensor.

Thus, in accordance with the multifunctional digital type anti-glare device according to the present invention, since the various functions such as the timer function, the stopwatch function, the world time display function, and the compass function may be additionally performed depending upon the work environment and the operating condition, the device may be utilized in a wider variety of ways and more conveniently.

It is to be understood that the detailed description which will be disclosed along with the accompanying drawings is intended to describe an exemplary embodiment of the present invention, and is not intended to describe a unique embodiment which the present invention can be carried out. Therefore, various equivalents and modifications are possible within the scope of the present invention at the time of filing.

Various embodiments have been described in the best mode for carrying out the invention. Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A multifunctional digital type anti-glare device comprising:
an optical detection unit for detecting light generated by a welding or cutting torch;
an electromagnetic wave sensor unit for sensing electromagnetic waves generated by the welding or cutting torch;
an electromagnetic wave detection unit for comparing a resonated signal received through the electromagnetic wave sensor unit with a variably set reference value, when an electromagnetic wave detection unit operation signal is applied;
a control unit for applying the electromagnetic wave detection unit operation signal to the electromagnetic wave detection unit and monitoring variation in an electromagnetic wave signal received via the electromagnetic wave detection unit, when optical detection is initiated by the optical detection unit;
a light transmission control unit for controlling variation in light transmissivity of an anti-glare plate depending upon an output signal of the control unit;
a timer input unit for counting a time;
a memory unit for storing time and date data for each nation of the world;
a timer display unit for displaying a set residual time using the count time of the timer input unit;
a stopwatch display unit for displaying a set elapsed time using the count time of the timer input unit; and
a world time and date display unit for displaying a time and a date of the selected nation using the time and date data for each nation of the world stored in the memory unit.

2. A multifunctional digital type anti-glare device comprising:
an optical detection unit for detecting light generated by a welding or cutting torch;
an electromagnetic wave sensor unit for sensing electromagnetic waves generated by the welding or cutting torch;
an electromagnetic wave detection unit for comparing a resonated signal received through the electromagnetic wave sensor unit with a variably set reference value, when an electromagnetic wave detection unit operation signal is applied;
a control unit for applying the electromagnetic wave detection unit operation signal to the electromagnetic wave detection unit and monitoring variation in an electromagnetic wave signal received via the electromagnetic wave detection unit, when optical detection is initiated by the optical detection unit;
a light transmission control unit for controlling variation in light transmissivity of an anti-glare plate depending upon an output signal of the control unit;
a geomagnetic sensor for detecting an azimuth using the earth's magnetic field; and
a compass display unit for displaying points of a compass depending upon the azimuth detected by the geomagnetic sensor.

3. The multifunctional digital type anti-glare device according to claim 1 or 2,
wherein the control unit determines that an orientation to be displayed is a preset orientation depending upon the azimuth detected by the geomagnetic sensor, and performs control such that the relevant orientation is indicated as points on the compass and displayed by the compass display unit.

4. The multifunctional digital type anti-glare device according to claim 1, wherein the light transmission control unit measures and displays the number of times of control and time when the variation in light transmissivity of the anti-glare plate is controlled depending upon the output signal of the control unit.

5. The multifunctional digital type anti-glare device according to claim 1, wherein the light transmission control unit measures the number of times of control and time and displays an effective time when the variation in light transmissivity of the anti-glare plate is controlled depending upon the output signal of the control unit.
